Europäisches Patentamt

European Patent Office

Office européen des brevets

(19)

(11)  **EP 0 515 988 B1**

(12)  **EUROPÄISCHE PATENTSCHRIFT**

(45) Veröffentlichungstag und Bekanntmachung des Hinweises auf die Patenterteilung:
**22.01.1997   Patentblatt 1997/04**

(51) Int Cl.$^6$: **H02M 3/335**

(21) Anmeldenummer: **92108637.7**

(22) Anmeldetag: **21.05.1992**

(54) **Eintakt-Durchflussumrichter mit einem Transformator und mit einer Schutzschaltung für einen elektronischen Schalter**

Single-ended forward converter with a transformer and with a protection circuit for an electronic switch

Convertisseur direct monophasé avec transformateur et circuit de protection pour un commutateur électronique

(84) Benannte Vertragsstaaten:
**AT BE CH DE DK ES FR GB GR IT LI LU NL PT SE**

(30) Priorität: **29.05.1991   EP 91108846**

(43) Veröffentlichungstag der Anmeldung:
**02.12.1992   Patentblatt 1992/49**

(73) Patentinhaber: **SIEMENS AKTIENGESELLSCHAFT
80333 München (DE)**

(72) Erfinder: **Biersack, Anton, Dipl.-Ing.
W-8000 München 71 (DE)**

(56) Entgegenhaltungen:
**US-A- 4 809 148            US-A- 4 870 554
US-A- 4 959 764**

- **W. HIRSCHMANN et al.: "Schaltnetzteile", 1990, SIEMENS AG, München DE, Seiten 320-326.**

**Beschreibung**

Die Erfindung bezieht sich auf einen wie im Oberbegriff des Patentanspruchs 1 angegebenen Eintakt-Durchflußumrichter mit einem Transformator und einer Schutzschaltung für einen elektronischen Schalter.

Aus der US Patentschrift 4,870,554 ist eine Schaltungsanordnung zur Ummagnetisierung beschrieben. Diese Schaltungsanordnung weist einen steuerbaren Schalter parallel zur Diode des Schaltumrichters auf. Um den steuerbaren Schalter anzusteuern, bedarf es jedoch einer zusätzlichen primärseitigen Wicklung eines Widerstandes sowie einer Diode.

Ein Durchflußumrichter ist z.B. aus dem Buch Schaltnetzteile, Walter Hirschmann und Alfred Hauenstein, Siemens AG, 1990, Seite 53 bekannt. Im selben Buch sind auf den Seiten 320-326 Schutzbeschaltungen für Schalttransistoren beschrieben, die die Belastung des Schalttransistors herabsetzen. Unter anderem ist auch eine Schutzschaltung angegeben, die eine Serienschaltung aus einem Kondensator und einer Diode enthält und als Zweipol zwischen den Anschlüssen des zu schützenden Schalttransistors angeordnet ist. Parallel zur Diode ist ein Widerstand angeordnet.

Bei dieser RCD-Beschaltung wird der Kondensator, wenn der zu schützende Schalter geschlossen wird, über den Widerstand entladen. Vor dem Schließen des Schalters bzw. nach der Ummagnetisierung, ist die Spannung am Kondensator etwa gleich der Versorgungsspannung. Damit ergeben sich Verluste, die der Kondensatorkapazität, der Taktfrequenz des Umrichters und dem Quadrat der Versorgungsspannung proportional sind.

Hohe Schaltfrequenzen haben den Vorteil, daß Bauteile mit vergleichsweise kleinen Abmessungen Verwendung finden können. Die Umschaltverluste in den Schaltelementen steigen jedoch mit der Frequenz an. Dies kann zu einer erheblichen Belastung der Schaltelemente und unerwünschten Beeinträchtigung des Wirkungsgrades führen.

Aufgabe der Erfindung ist es, einen Eintakt-Durchflußumrichter der im Oberbegriff des Patentanspruchs 1 angegebenen Art derart auszubilden, daß sich für den im primärseitigen Hauptstromkreis angeordneten elektronischen Schalter eine möglichst verlustarme Schaltentlastung ergibt. Insbesondere soll der Durchflußumrichter ohne nennenswerte Wirkungsgradverluste arbeiten und möglichst hohe Schaltfrequenzen gestatten.

Überlegungen im Rahmen der Erfindung haben ergeben, daß der Widerstand der bekannten RCD-Schaltung entfallen kann, wenn der Diodenstromzweig auch für den Entladestrom des Kondensators durchlässig gemacht wird und daß ein elektronischer Schalter diese Funktion übernehmen kann.

Gemäß der Erfindung wird der Durchflußumrichter zur Lösung dieser Aufgabe in der im kennzeichnenden Teil des Patentanspruchs 1 angegebenen Weise ausgebildet.

Dabei kann der Transformator für den primärseitigen und den sekundärseitigen Hauptstromkreis eine gemeinsame oder getrennte Wicklungen aufweisen. Die in der Schutzschaltung vorgesehene Parallelschaltung aus Diode und elektronischem Schalter gewährleistet, daß beim Öffnen des im Hauptstromkreis angeordneten elektronischen Schalters über die Diode sofort ein Ladestrom des Kondensators fließt und für das Schließen des elektronischen Schalters der Schutzschaltung ein Zeitpunkt gewählt werden kann, der einen ausreichenden Sicherheitsabstand vom Ende der Einschaltphase des im Hauptstromkreis angeordneten elektronischen Schalters hat. Der Zeitpunkt für das Öffnen des elektronischen Schalters der Schutzschaltung gegen Ende der Sperrphase des im Hauptstromkreis angeordneten elektronischen Schalters ist unkritisch, da durch eine geeignete Bemessung des Tastverhältnisses bei der Ansteuerung des im Hauptstromkreis angeordneten elektronischen Schalters leicht sichergestellt werden kann, daß der Kondensator der Schutzschaltung vor dem Öffnen des Schalters der Schutzschaltung umgeladen ist.

Durch die erfindungsgemäßen Maßnahmen ergibt sich der Vorteil, daß mit Hilfe einer einfach realisierbaren Schutzschaltung ein wirksamer Schutz des elektronischen Schalters gegen zu hohe Sperrspannungen erzielt wird. Darüberhinaus gewährleistet die Schutzschaltung, daß der Transformatorkern besonders verlustarm ummagnetisiert wird.

Die für den elektronischen Schalter der Schutzschaltung geltenden Bedingungen für die Ansteuerung lassen sich vorteilhaft durch eine Steuerung mit Steuerimpulsen entsprechend Anspruch 2 oder durch eine Steuerung mittels einer Steuerspannung entsprechend Anspruch 3 erfüllen. Als Steuerspannung kann erfindungsgemäß die Spannung des Kondensators der Schutzschaltung dienen.

Die Serienschaltung der Schutzschaltung kann parallel zu dem zu schützenden elektronischen Schalter angeordnet sein. Bei Anordnung des elektronischen Schalters der Schutzschaltung entsprechend Anspruch 4 ergeben sich demgegenüber besonders günstige Verhältnisse.

Die Weiterbildungen der Erfindung nach den Ansprüchen 5 bis 8 sind bei Verwendung eines Feldeffekttransistors als elektronischer Schalter der Schutzschaltung von Vorteil.

Die weitere Ausgestaltung der Erfindung nach Anspruch 9 bezieht sich auf den Fall, daß eine Schutzschaltung mit Feldeffekttransistor als elektronischer Schalter parallel zum elektronischen Schalter des Hauptstromkreises angeordnet ist.

Schließlich kann es zweckmäßig sein, als elektronischen Schalter der Schutzschaltung einen bipolaren Transistor vorzusehen.

Die Erfindung wird anhand der in den Figuren 1 und 3 bis 7 und 9 gezeigten Ausführungsbeispiele sowie anhand der in den Figuren 2 und 8 gezeigten Impulsdiagramme näher erläutert.

Es zeigen

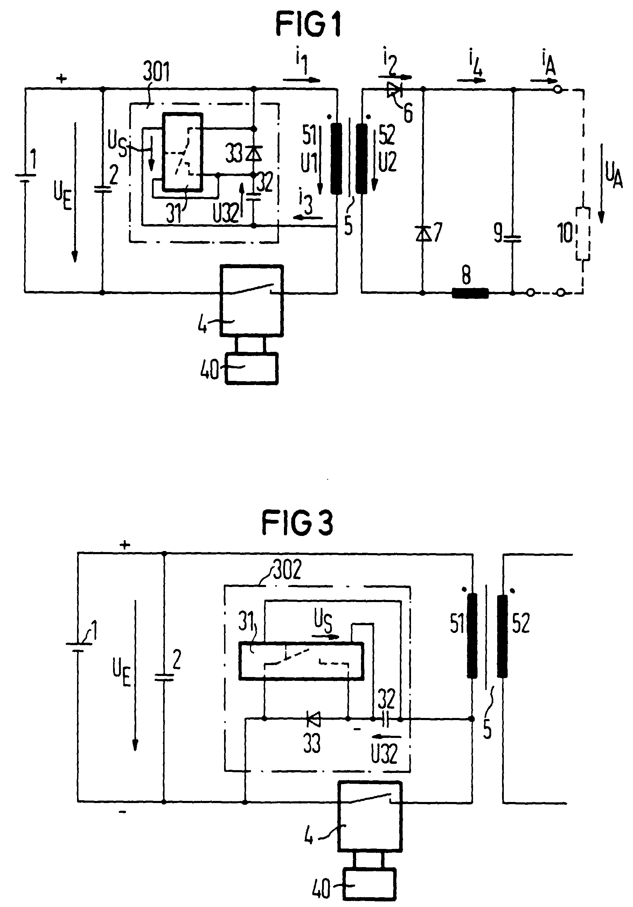

Fig. 1          einen Eintakt-Durchflußumrichter mit einer Schutzschaltung,

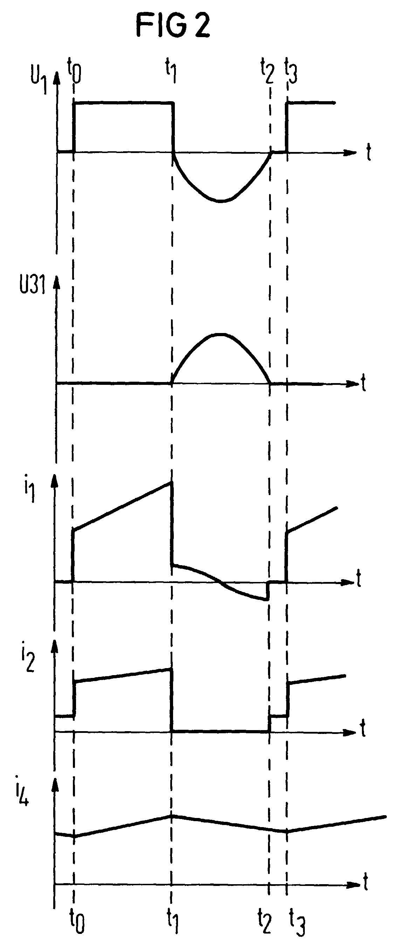

Fig. 2          ein Impulsdiagramm für den Umrichter nach Fig. 1,

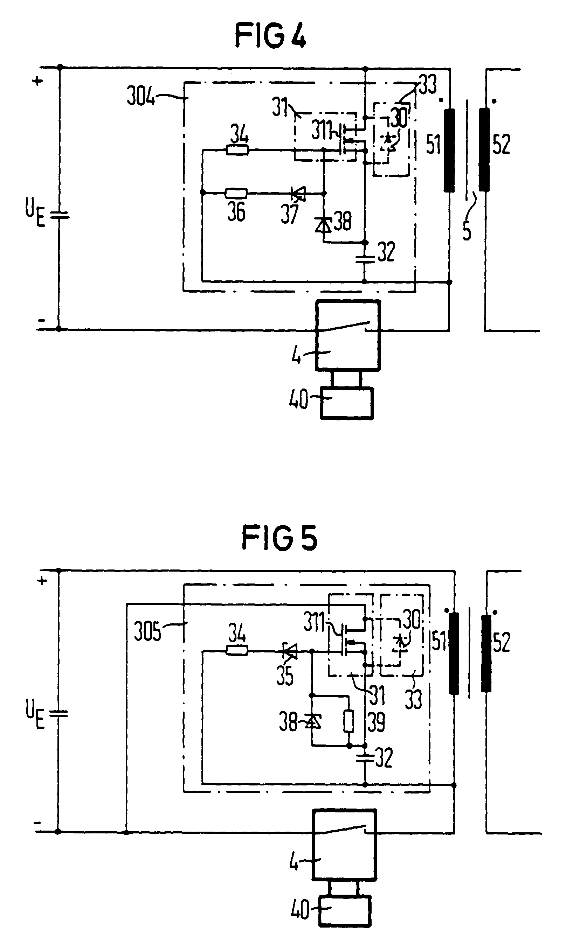

Fig. 3          eine Abwandlung des Umrichters nach Fig. 1,

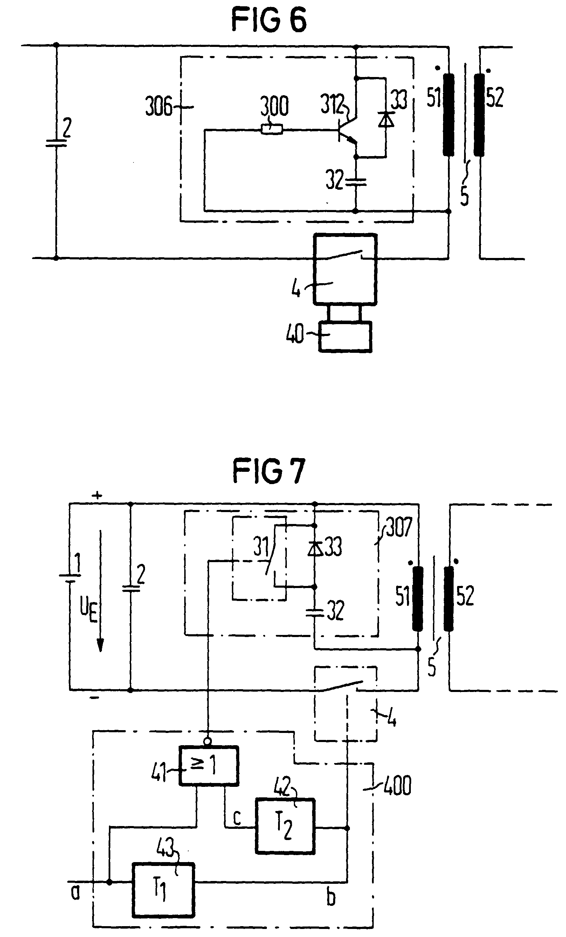

Fig. 4 und 5    Schutzschaltungen mit Feldeffekttransistor für die Durchflußumrichter nach Fig. 1 und 2,

Fig. 6          eine Schutzschaltung mit bipolarem Transistor für den Durchflußumrichter nach Fig. 1,

Fig. 7          einen Durchflußumrichter mit Erzeugung miteinander verknüpfter Steuerimpulse für den elektronischen Schalter des Hauptstromkreises und der Schutzschaltung,

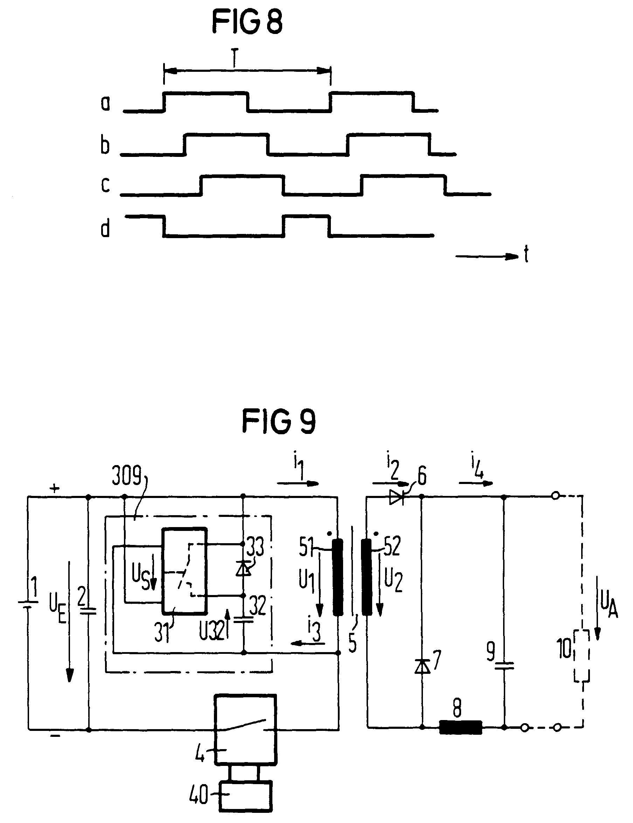

Fig. 8          ein Impulsdiagramm für den Durchflußumrichter nach Fig. 7 und

Fig. 9          eine Abwandlung des Durchflußumrichters nach Fig. 1 bezüglich der Ansteuerung des elektronischen Schalters der Schutzschaltung.

Fig. 1 zeigt einen Eintakt-Durchflußumrichter mit einem elektronischen Schalter 4. Die von der Gleichspannungsquelle 1 gelieferte Eingangsspannung $U_E$ liegt am Kondensator 2, die Ausgangsspannung $U_A$ am Kondensator 9. Parallel zum Kondensator 2 liegt in einem primärseitigen Hauptstromkreis eine aus der Primärwicklung 51 des Transformators 5 und dem elektronischen Schalter 4 gebildete Serienschaltung. Der elektronische Schalter 4 ist mit seinem Steuereingang an die Steuerschaltung 4 angeschlossen, die taktgesteuert eine Folge von, insbesondere impulsdauermodulierten, Einschaltimpulsen abgibt.

Die Primärwicklung 51 des Transformators 5 wird daher über den elektronischen Schalter 4 periodisch an die Eingangsspannungsquelle 1 gelegt.

Zwischen der Sekundärwicklung 52 des Transformators 5 und dem Kondensator 9 liegt die Gleichrichterdiode 6. In einem auf die Gleichrichterdiode 6 folgenden Querzweig ist die Freilaufdiode 7 angeordnet. In einem Längszweig zwischen Freilaufdiode 7 und Kondensator 9 liegt die Drossel 8. Am Kondensator 9 steht die Ausgangsspannung $U_A$ für den Lastwiderstand 10 zur Verfügung. In den mit der Ausgangsspannung $U_A$ gespeisten Verbraucher fließt der Speisestrom $I_A$.

Die Schutzschaltung 301 dient zum Schutz des elektronischen Schalters 4 und sorgt für eine wirksame Ausschaltentlastung. Die Schutzschaltung enthält die Serienschaltung 32, 33. Diese Serienschaltung besteht aus dem Kondensator 32 und der Diode 33 und ist parallel zur Primärwicklung 51 des Transformators 5 angeordnet. Die Diode 33 der Serienschaltung ist in bezug auf die Eingangsgleichspannung $U_E$ in Sperrichtung gepolt. Parallel zur Diode 33 liegt der elektronische Schalter 31, dessen Steuereingang an den Kondensator 32 angeschlossen ist.

Im stationären Zustand ergeben sich die in Fig. 2 dargestellten Spannungs- und Stromverläufe.

Der elektronische Schalter 31 hat die Schaltschwelle $U_{TH}$ und wird durch die Spannung U32 des Kondensators 32 gesteuert. Ist die Spannung U32 größer als die Schaltschwelle $U_{TH}$, so ist der elektronische Schalter 31 geschlossen. Ist die Spannung U32 kleiner als die Schaltschwelle $U_{TH}$, so ist der elektronische Schalter 31 geöffnet.

Die Schaltschwelle $U_{TH}$ ist wesentlich, insbesondere etwa um den Faktor 10, kleiner als die Spannung der Eingangsgleichspannungsquelle 1, d.h. es gilt

$$U_{TH} \ll U_E.$$

Dabei ergeben sich entsprechend Fig. 2 drei zeitlich aufeinanderfolgende Phasen.

Die erste Phase umfaßt die Zeitspanne $t_0 < t < t_1$. In dieser Phase ist der elektronische Schalter 4 geschlossen. Die Spannung U1 am Transformator 5 ist gleich der Spannung $U_E$. Die Kondensatorspannung U32 beträgt 0 Volt. Deshalb ist der elektronische Schalter 31 geöffnet. Der Strom il, der durch die Primärwicklung 51 des Transformators 5 fließt, ist die Summe aus dem transformierten Laststrom i2 und dem Magnetisierungsstrom der Hauptinduktivität des Transformators 5. Der Laststrom i2 stimmt mit dem Strom i4 überein und fließt als solcher durch die Diode 6 in den Lastkreis.

Die zweite Phase umfaßt die Zeitspanne t1 < t < t2, während der der Kern des Transformators 5 ummagnetisiert wird. Der elektronische Schalter 4 öffnet. Die Spannungen U1 und U2 betragen jeweils 0 Volt. Der Sekundärstrom i2 ist Null. Der Strom i4 durch die Speicherdrossel 8 fließt nun über die Freilaufdiode 7. Da der Sekundärstrom i2 Null ist, fließt primärseitig nur noch der Magnetisierungsstrom der Hauptinduktivität des Transformators 5. Da der Schalter 4 geöffnet ist, fließt dieser Strom als Strom i3 über den Kondensator 32 und die Diode 33. Dabei wird der Kondensator 32 aufgeladen. Die Spannung U32 am Kondensator 32 steigt. Damit steigt auch die Steuerspannung des elektronischen Schalters 31. Der elektronische Schalter 31 schließt.

Die Hauptinduktivität des Transformators 5 und der Kondensator 32 bilden zusammen einen Parallelschwingkreis, solange die Spannung U32 größer als die Schaltschwelle $U_{TH}$ ist und damit der elektronische Schalter 31 geschlossen ist. Während einer Halbschwingung des Parallelschwingkreises wird der Kern des Transformators 5 ummagnetisiert. Der dazugehörige Magnetisierungsstrom i3 kehrt seine Richtung um.

Die dritte Phase umfaßt die Zeitspanne t2 < t < t3. Während dieser Ruhephase sind die elektronischen Schalter 4 und 31 geöffnet. Primärseitig fließt kein Strom mehr. Der Magnetisierungsstrom, der in der zweiten Phase als Strom i3 durch die Schutzschaltung fließen konnte, fließt nun auf der Sekundärseite des Transformators 5 als Strom i2 weiter. Da jedoch der Strom i4 sehr viel größer als der Strom i2 ist, ist die Freilaufdiode 7 leitend und die Spannung U2 praktisch gleich Null. Die Magnetisierung des Kernes des Transformators 5 bleibt näherungsweise konstant.

Der Tastgrad der den elektronischen Schalter 4 steuernden Einschaltimpulse, gegeben durch das Verhältnis von Einschaltzeit zu Periodendauer, wird so gewählt, daß die Ausschaltphase des elektronischen Schalters 4 für die aus Fig. 2 ersichtliche Halbschwingung der Kondensatorspannung U32 ausreicht. Vorzugsweise beträgt der Tastgrad höchstens 0,5.

Bei den Durchflußumrichtern nach den Figuren 3 bis 7 ist der ausgangsseitige Hauptstromkreis zweckmäßigerweise in der gleichen Art ausgebildet, wie bei dem Durchflußumrichter nach Fig. 1, der Einfachheit halber jedoch in den Figuren nicht näher dargestellt.

Der Durchflußumrichter nach Fig. 3 ist weitgehend wie der nach Fig. 1 ausgebildet. Abweichend ist die Serienschaltung 32, 33 der Schutzschaltung nicht parallel zur Primärwicklung 51 des Transformators 5, sondern parallel zum elektronischen Schalter 4 angeordnet. Hierdurch ergibt sich, daß sich der Kondensator 32 bei geöffnetem elektronischen Schalter 4 am Ende der zweiten Phase nach Fig. 2 nicht auf die Spannung Null entlädt, sondern die Spannung UE der Eingangsspannungsquelle 1 annimmt. Die Schaltschwelle des elektronischen Schalters 31 ist daher so zu bemessen, daß sie etwas über der Spannung $U_E$ liegt.

Der Durchflußumrichter nach Fig. 4 entspricht der Grundschaltung nach Fig. 1. Als elektronischer Schalter 31 dient der Feldeffekttransistor 311. Die Diode 33 der Schutzschaltung ist bereits als Substrat- bzw. Inversdiode 30 im Feldeffekttransistor 311 enthalten, kann jedoch gegebenenfalls zusätzlich parallel zur Drain-Source-Strecke des Feldeffekttransistors angeordnet werden. Der Kondensator 32 ist auf der einen Seite unmittelbar mit der Source-Elektrode und auf der anderen Seite über den Gate-Vorwiderstand 34 mit der Gate-Elektrode des Feldeffekttransistors 311 verbunden. Parallel zum Gate-Vorwiderstand 34 liegt die aus dem Widerstand 36 und der Diode 37 bestehende Serienschaltung. Parallel zur Gate-Source-Strecke des Feldeffekttransistors 311 liegt die Z-Diode 38. Die Diode 37 ist für den Entladestrom der Gate-Source-Kapazität des Feldeffekttransistors 311 in Durchlaßrichtung gepolt. Die Z-Diode 38 ist so gepolt, daß sie die Gate-Source-Spannung des Feldeffekttransistors 311 auf zulässige Werte begrenzt.

Die Diode 37 und der Widerstand 36 dienen zum schnellen Entladen der Gate-Source-Kapazität des Feldeffekttransistors 311.

Der Durchflußumrichter nach Fig. 5 stimmt mit dem nach Fig. 4 weitgehend überein. Abweichend ist die Serienschaltung 32, 33 der Schutzschaltung 305 parallel zum elektronischen Schalter 4 angeordnet. Außerdem entfallen der Widerstand 36 und die Diode 37. Im Hinblick auf die höhere Entladespannung des Kondensators 32 ist in Serie zum Gate-Vorwiderstand 34 die Z-Diode 35 angeordnet, die in Bezug auf die am Ende der Sperrphase des elektronischen Schalters 4 am Kondensator 32 liegende Spannung $U_E$ in Sperrichtung gepolt ist. Parallel zur Diode 38 liegt der Widerstand 39, der zusammen mit mit dem Widerstand 34 und der Z-Diode 35 einen Spannungsteiler für die Kondensatorspannung U32 bildet.

Bei dem Eintakt-Durchflußumrichter nach Fig. 6 dient der bipolare Transistor 312 mit Basisvorwiderstand 300 als elektronischer Schalter der Schutzschaltung 306.

Die Serienschaltung 32, 33 liegt wie bei dem Durchflußumrichter nach Fig. 1 parallel zur Primärwicklung 51 des Übertragers 5. Die Diode 33 liegt parallel zur Emitter-Kollektor-Strecke des Transistors 312 und ist als diskretes Bauteil ausgeführt.

Der Durchflußumrichter nach Fig. 7 stimmt in seiner Grundschaltung mit dem nach Fig. 1 überein. Abweichend ist die Ansteuerung des elektronischen Schalters 31 der Schutzschaltung 307. Den Steuereingängen der elektronischen Schalter 4 und 31 ist die Steuerschaltung 400 vorgeschaltet, die die beiden Verzögerungsschaltungen 42 und 43 und das NOR-Glied 41 enthält.

Ein dem Eingang a zugeführter Impuls gelangt über die Verzögerungsschaltung 43 an den Steuereingang des elektronischen Schalters 4 und von dort über die weitere Verzögerungsschaltung 42 an einen der beiden Eingänge des NOR-Gliedes 41. Der andere Eingang des NOR-Gliedes 41 liegt am Eingang a der Steuerschaltung 400. Der Ausgang d des NOR-Gliedes 41 ist an den Steuereingang des elektronischen Schalters 31 geführt.

Für die beiden Verzögerungsschaltungen 42 und 43 gilt A (t) = E (t - $t_x$), wobei E das Eingangssignal, $T_x$ die Verzögerungszeit und A das Ausgangssignal ist. Die Verzögerungszeiten T1 und T2 betragen jeweils etwa 5 % der Periodendauer der dem Eingang a zugeführten Impulsfolge.

Das Impulsdiagramm nach Fig. 8 zeigt den zeitlichen Verlauf der in der Steuerschaltung 400 vorkommenden Impulsspannungen. Dem Eingang a der Steuerschaltung 400 wird eine Folge von Impulsen zugeführt, die die Periodendauer T hat. Diese Impulsfolge erscheint am Ausgang b der Verzögerungsschaltung 43 mit einer ersten und am Ausgang c der Verzögerungsschaltung 42 mit einer zweiten, gegenüber der ersten größeren Verzögerungszeit. Durch Verknüpfung der Impulsfolge des Eingangs a und des Ausgangs c mit Hilfe des NOR-Gliedes 41 wird die Impulsspannung d gewonnen. Bedingung für die am Ausgang d abgegebenen Einschaltimpulse ist, daß weder am Eingang a noch am Ausgang c Logikpegel 1 herrscht. Auf diese Weise ist sichergestellt, daß die Einschaltimpulse am Ausgang d nur während eines zeitlichen Teilbereiches der Ausschaltphase des elektronischen Schalters 4 vorhanden sind.

Der in Fig. 9 gezeigte Durchflußumrichter stimmt mit dem nach Fig. 1 weitgehend überein. Unterschiedlich ist die Ansteuerung des elektronischen Schalters 31 der Schutzschaltung 309. Als Steuerspannung $U_S$ des elektronischen Schalters 31 dient die Spannung -U1 der Primärwicklung 51. Die Spannung -U1 stimmt während der Sperrphase des elektronischen Schalters 4 näherungsweise mit der Spannung U32 des Kondensators 32 überein.

Die aus den Figuren ersichtlichen Schutzschaltungen sind besonders verlustarm. Beispielsweise zeigt ein Vergleich des Durchflußumrichters nach Fig. 4 mit einem solchen mit RCD-Beschaltung die folgende Verringerung der Verluste.

Für den Durchflußumrichter mit RCD-Schaltung gilt näherungsweise

$$PV1 = \frac{1}{2} C \cdot U_E^{\,2} \cdot f,$$

wobei f die Taktfrequenz des Wandlers, C die Kapazität des Kondensators ist.

Bei dem Durchflußumrichter nach Fig. 4 kommen für den vorliegenden Vergleich nur die Verluste in der FET-Ansteuerung in Betracht. Unter der Annahme

$$t_2 - t_1 \approx \frac{1}{2} T \text{ und } \hat{U}_C \approx U_B$$

ergibt sich

$$P_{V2} \leqq \frac{1}{2} \frac{(U_B - U_2)^2}{2 R_1},$$

wobei $U_2$ die Sperrspannung der Z-Diode 38 ist.

Mit typischen Bauteilewerten ergibt sich eine Reduzierung der Verluste um:

$$\frac{P_{V1} V - V P_{V2}}{P_{V1}} = 70....90 \%$$

Die Schutzschaltung ist besonders vorteilhaft bei getakteten Stromversorgungsgeräten nach dem Prinzip des Eintakt-Durchflußumrichters bei hoher Eingangsspannung, kleiner Hauptinduktivität im Transformator und bei hoher Frequenz.

## Patentansprüche

1. Eintakt-Durchflußumrichter, in dessen an eine Eingangsgleichspannungsquelle (1) anschließbaren primärseitigen Hauptstromkreis in Serie zu einer Wicklung (51) eines Transformators (51) ein elektronischer Schalter (4) angeordnet ist und bei dem an wenigstens einer Wicklung (52) des Transformators (5) ein ausgangseitiger Hauptstromkreis mit einer Gleichrichterdiode (6), einer Freilaufdiode (7) und einer Drossel (8) angeschlossen ist, wobei zum Schutz des elektronischen Schalters (4) eine Schutzschaltung mit einer aus einem Kondensator (32) und einer in bezug auf einen im primärseitigen Hauptstromkreis fließenden Magnetisierungsstrom in Durchlaßrichtung gepolten Diode (33) bestehenden Serienschaltung vorgesehen ist und die Schutzschaltung einen parallel zur Diode (33) angeordneten derart steuerbaren elektronischen Schalter (31, 311) enthält,
**dadurch gekennzeichnet,**
daß er in einem zeitlichen Teilbereich der Sperrphase des im Hauptstromkreis angeordneten elektrischen Schalters (4) sowohl für den Ladestrom als auch für den Entladestrom des Kondensators (32) leitend und in der gesamten Einschaltphase des im Hauptstromkreis angeordneten elektrischen Schalters (4) gesperrt ist, daß der steuerbare elektronische Schalter (31, 311) mit dem am Kondensator anliegenden Potential angesteuert wird und daß der zeitliche Teilbereich so gewählt ist, daß der steuerbare elektronische Schalter (31, 311) von den Umschaltzeitpunkten des im Hauptstromkreis angeordneten elektrischen Schalters (4) jeweils einen vorgegebenen Sicherheitsabstand einhält.

2. Eintakt-Durchflußumrichter nach Anspruch 1,
**dadurch gekennzeichnet,**
daß der elektronische Schalter (4) des Hauptstromkreises und der elektronische Schalter (31) der Schutzschaltung (307) mit Hilfe von Steuerimpulsen steuerbar sind, die in vorgegebener Weise miteinander verknüpft sind.

3. Eintakt-Durchflußumrichter nach Anspruch 1,
**dadurch gekennzeichnet,**
daß der elektronische Schalter (31) der Schutzschaltung (301...306) durch eine Steuerspannung ($U_S$) steuerbar ist, die wenigstens näherungsweise mit der Spannung (U32) des Kondensators (32) übereinstimmt und daß der elektronische Schalter (31) der Schutzschaltung (301...306) derart steuerbar ist, daß er bei Steuerspannungen ($U_S$) oberhalb einer vorgegebenen Schaltschwelle geschlossen und bei Steuerspannungen unterhalb der vorgegebenen Schaltschwelle geöffnet ist.

4. Eintakt-Durchflußumrichter nach einem der Ansprüche 1 bis 3,
**dadurch gekennzeichnet,**
daß die Serienschaltung der Schutzschaltung (301, 304, 306, 307, 309) parallel zu einer Wicklung (51) des Transformators (5) angeordnet ist.

**5.** Eintakt-Durchflußumrichter nach Anspruch 4,
**dadurch gekennzeichnet,**
daß der elektronische Schalter (31) der Schutzschaltung (304, 305) ein Feldeffekttransistor (311) ist, dessen Inversdiode (30) in bezug auf die Spannung ($U_E$) der Eingangsspannungsquelle (1) in Sperrrichtung gepolt ist.

**6.** Eintakt-Durchflußumrichter nach Anspruch 5,
**dadurch gekennzeichnet,**
daß parallel zu einem Gate-Vorwiderstand (34) des Feldeffekttransistors (311) eine Serienschaltung aus einem Widerstand (36) und einer für den Endladestrom der Gate-Source-Kapazität des Feldeffekttransistors (311) in Durchlaßrichtung gepolten Diode (37) angeordnet ist.

**7.** Eintakt-Durchflußumrichter nach Anspruch 6,
**dadurch gekennzeichnet,**
daß die Diode (33) der Kondensator-Diode-Serienschaltung der Schutzschaltung durch die Inversdiode (30) gebildet ist.

**8.** Eintakt-Durchflußumrichter nach Anspruch 6 oder 7,
**dadurch gekennzeichnet,**
daß parallel zur Gate-Source-Strecke des Feldeffekttransistors (311) eine für die Steuergleichspannung in Sperrrichtung gepolte Z-Diode (38) angeordnet ist.

**9.** Eintakt-Durchflußumrichter nach einem der Ansprüche 6 bis 8,
**dadurch gekennzeichnet,**
daß die Serienschaltung der Schutzschaltung (305) parallel zum elektronischen Schalter (4) des Hauptstromkreises angeordnet ist und daß in Serie zum Gate-Vorwiderstand (34) eine Z-Diode (35) und parallel zur Gate-Source-Strecke des Feldeffekttransistors (311) ein ohmscher Widerstand (39) angeordnet ist.

**Claims**

**1.** Single-ended forward converter, in whose primary-side main circuit, which can be connected to an input DC voltage source (1), an electronic switch (4) is arranged in series with a winding (51) of a transformer (5), and in which an output-side main circuit having a rectifier diode (6), a freewheeling diode (7) and an inductor (8) is connected to at least one winding (52) of the transformer (5), a protection circuit having a series circuit comprising a capacitor (32) and a diode (33) which is forward biased with regard to a magnetization current flowing in the primary-side main circuit being provided for the protection of the electronic switch (4), and the protection circuit containing an electronic switch (31, 311) which is arranged in parallel with the diode (33) and can be controlled in such a way [sic], characterized in that it is switched on both for the charging current and for the discharge current of the capacitor (32) during part of the off-phase period of the electric switch (4) arranged in the main circuit and is switched off in the entire turn-on phase of the electric switch (4) arranged in the main circuit, in that the controllable electronic switch (31, 311) is driven by the potential present at the capacitor, and in that the part of the off-phase period is selected in such a way that the controllable electronic switch (31, 311) in each case maintains a predetermined safety interval from the changeover instants of the electric switch (4) arranged in the main circuit.

**2.** Single-ended forward converter according to Claim 1, characterized in that the electronic switch (4) of the main circuit and the electronic switch (31) of the protection circuit (307) can be controlled with the aid of control pulses which are logically combined with one another in a predetermined manner.

**3.** Single-ended forward converter according to Claim 1, characterized in that the electronic switch (31) of the protection circuit (301...306) can be controlled by a control voltage ($U_S$) which coincides at least approximately with the voltage (U32) of the capacitor (32), and in that the electronic switch (31) of the protection circuit (301...306) can be controlled in such a way that it is closed for control voltages ($U_S$) above a predetermined switching threshold and is open for control voltages below the predetermined switching threshold.

**4.** Single-ended forward converter according to one of Claims 1 to 3, characterized in that the series circuit of the protection circuit (301, 304, 306, 307, 309) is arranged in parallel with a winding (51) of the transformer (5).

**5.** Single-ended forward converter according to Claim 4, characterized in that the electronic switch (31) of the protection circuit (304, 305) is a field-effect transistor (311), whose inverse diode (30), is reverse biased with regard to the voltage ($U_E$) of the input voltage source (1).

**6.** Single-ended forward converter according to Claim 5, characterized in that a series circuit formed by a resistor (36) and a diode (37) which is forward biased for the discharge current of the gate-source capacitor of the field-effect transistor (311) is arranged in parallel with a gate series resistor (34) of the field-effect transistor (311).

**7.** Single-ended forward converter according to Claim 6, characterized in that the diode (33) of the capacitor/diode series circuit of the protection circuit is formed by the inverse diode (30).

8. Single-ended forward converter according to Claim 6 or 7, characterized in that a Z diode (38) which is reverse biased for the DC control voltage is arranged in parallel with the gate-source junction of the field-effect transistor (311).

9. Single-ended forward converter according to one of Claims 6 to 8, characterized in that the series circuit of the protection circuit (305) is arranged in parallel with the electronic switch (4) of the main circuit, and in that a Z diode (35) is arranged in series with the gate series resistor (34) and a non-reactive resistor (39) is arranged in parallel with the gate-source junction of the field-effect transistor (311).

**Revendications**

1. Convertisseur direct à une alternance, dans le circuit de courant principal primaire pouvant être raccordé à une source (1) de tension continue d'entrée duquel est disposé, en série avec un enroulement (51) d'un transformateur (51), un interrupteur (4) électronique et dans lequel un circuit de courant principal côté sortie comportant une diode (6) redresseuse, une diode (7) de roue libre et une bobine (8) est connecté à au moins un enroulement (52) du transformateur (5), un circuit de protection comportant un circuit série constitué d'un condensateur (32) et d'une diode (33) polarisée dans le sens passant par rapport à un courant de magnétisation passant dans le circuit de courant principal du côté primaire étant prévu pour protéger l'interrupteur électronique (4) et le circuit de protection comprenant un interrupteur électronique (31, 311) pouvant être commandé et disposé en parallèle avec la diode (33),
caractérisé en ce que
le convertisseur direct à une alternance est conducteur dans une plage partielle temporelle de la phase de blocage de l'interrupteur (4) électrique disposé dans le circuit de courant principal à la fois pour le courant de charge et pour le courant de décharge du condensateur (32) et il est bloqué pendant toute la phase de conduction de l'interrupteur (4) électrique disposé dans le circuit de courant principal, l'interrupteur (31, 311) électronique pouvant être commandé est commandé par le potentiel s'appliquant au condensateur et la gamme partielle temporelle est choisie de telle sorte que l'interrupteur électronique (31, 311) pouvant être commandé respecte un intervalle de sécurité prescrit par rapport aux instants de commutation de l'interrupteur (4) électrique disposé dans le circuit de courant principal.

2. Convertisseur direct à une alternance suivant la revendication 1,
caractérisé en ce que l'interrupteur électronique (4) du circuit de courant principal et l'interrupteur électronique (31) du circuit (307) de protection peuvent être commandés à l'aide d'impulsions de commande qui sont combinées entre elles de manière prescrite.

3. Convertisseur direct à une alternance suivant la revendication 1,
caractérisé en ce que
l'interrupteur électronique (31) du circuit de protection (301 à 306) peut être commandé par une tension ($U_S$) de commande, qui concorde au moins approximativement avec la tension (U32) du condensateur (32) et l'interrupteur électronique (31) du circuit (301 à 306) de protection peut être commandé de sorte à être fermé pour des tensions de commande ($U_S$) au-dessus d'un seuil de commutation prescrit et à être ouvert pour des tensions de commande en-dessous du seuil de commutation prescrit.

4. Convertisseur direct à une alternance suivant l'une des revendications 1 à 3,
caractérisé en ce que
le circuit série du circuit (301, 304, 306, 307, 309) de protection est disposé en parallèle avec un enroulement (51) du transformateur (5).

5. Convertisseur direct à une alternance suivant la revendication 4,
caractérisé en ce que
l'interrupteur électronique (31) du circuit (304, 305) de protection est un transistor (311) à effet de champ, dont la diode en inverse (30) est polarisée dans le sens de blocage par rapport à la tension ($U_E$) de la source (1) de tension d'entrée.

6. Convertisseur direct à une alternance suivant la revendication 5,
caractérisé en ce que
un circuit série constitué d'une résistance (36) et d'une diode (37) polarisée dans le sens passant pour le courant de décharge de la capacité grille source du transistor (311) à effet de champ est disposé en parallèle avec une résistance (34) de polarisation de grille du transistor (311) à effet de champ.

7. Convertisseur direct à une alternance suivant la revendication 6,
caractérisé en ce que
la diode (33) du circuit série condensateur-diode du circuit de protection est formée par la diode (30) en inverse.

8. Convertisseur direct à une alternance suivant la revendication 6 ou 7,
caractérisé en ce que
une diode Z (38) polarisée dans le sens de blocage pour la tension continue de commande est disposée en parallèle avec la section grille source du transistor (311) à effet de champ.

9. Convertisseur direct à une alternance suivant l'une des revendications 6 à 8,
caractérisé en ce que,
le circuit série du circuit (305) de protection est disposé en parallèle avec l'interrupteur électronique (4) du circuit de courant principal et une diode Z (35) est disposée en série avec la résistance (34) de polarisation de grille et une résistance ohmique (39) est disposée en parallèle avec la section grille source du transistor (311) à effet de champ.

# FIG 1

# FIG 3

# FIG 2

## FIG 4

## FIG 5

## FIG 6

## FIG 7

# FIG 8

# FIG 9